(19) Europäisches Patentamt

European Patent Office

Office européen des brevets

(11) **EP 1 017 160 B1**

(12) **EUROPÄISCHE PATENTSCHRIFT**

(45) Veröffentlichungstag und Bekanntmachung des Hinweises auf die Patenterteilung:
**23.02.2005 Patentblatt 2005/08**

(51) Int Cl.⁷: **H02P 6/18**

(21) Anmeldenummer: **99123636.5**

(22) Anmeldetag: **27.11.1999**

(54) **Verfahren zur Kommutierung eines elektronisch kommutierten bürstenlosen Mehrphasen-Permanent-Magnetmotors**

Method to commutate an electronic commutated brushless multi-phase permanent magnet motor

Méthode pour faire la commutation d'un moteur multiphasé sans balai commuté électroniquement à aimant permanent

(84) Benannte Vertragsstaaten:
**DE FR GB IT**

(30) Priorität: **28.12.1998 DE 19860448**

(43) Veröffentlichungstag der Anmeldung:
**05.07.2000 Patentblatt 2000/27**

(73) Patentinhaber: **GRUNDFOS A/S
DK-8850 Bjerringbro (DK)**

(72) Erfinder:
• **Jensen, Niels Due
8850 Bjerringbro (DK)**
• **Aarestrup, Jan Caroe
8850 Bjerringbro (DK)**

(74) Vertreter: **Vollmann, Heiko, Dipl.-Ing. et al
Patentanwälte Wilcken & Vollmann,
Bei der Lohmühle 23
23554 Lübeck (DE)**

(56) Entgegenhaltungen:
**EP-A- 0 589 630      EP-A- 0 788 221
EP-A- 0 801 463**

• **PATENT ABSTRACTS OF JAPAN vol. 017, no. 003 (E-1301), 6. Januar 1993 (1993-01-06) & JP 04 236193 A (MATSUSHITA ELECTRIC IND CO LTD), 25. August 1992 (1992-08-25)**

**Beschreibung**

Die Erfindung betrifft ein Verfahren zur Kommutierung eines elektronisch kommutierten bürstenlosen Mehrphasen-Permanentmagnetmotors gemäß den im Oberbegriff des Anspruchs 1 angegebenen Merkmalen.

Mehrphasen-Permanentmagnetmotoren werden heutzutage vermehrt elektronisch, d. h. bürstenlos kommutiert. Das rotierende Drehfeld in der Ständerwicklung wird dabei elektronisch erzeugt, zum Beispiel mittels eines Spannungs-/Frequenzumrichters. Um die elektrische Leistung optimal in mechanische Motorleistung umsetzen zu können und um einen möglichst vibrationsarmen, ruhigen und geräuscharmen Motorlauf zu gewährleisten, ist es erforderlich, die Geschwindigkeit zwischen dem elektronisch erzeugten umlaufenden Drehfeld des Stators und dem oder den darin umlaufenden Permanentmagnet zu synchronisieren. Hierzu ist eine Positionserfassung des Rotors erforderlich, was entweder durch statorseitig vorgesehene Sensoren, zum Beispiel Hallsensoren, oder aber auch durch die Erfassung der in den Statorwicklungen induzierten Spannunge (Eigeninduktion) erfolgen kann. Ersteres bedingt einen nicht unerheblichen Messaufwand sowohl zur Erfassung als auch zur Auswertung. Letzteres ist jedoch in der Praxis nur mit Hilfe einer gesonderten Messwicklung oder aber bei blockkommutierten Motoren möglich, da eine Messung der Eigeninduktion ohne großen messtechnischen Aufwand nur in der versorgungsspannungslosen Phase möglich ist, wenn die durch Eigeninduktion in der Motorphasenwicklung entstehende Spannung nicht durch die externe Versorgungsspannung überlagert wird.

Aus US-PS 4,654,566 ist es bekannt, durch Erfassung der innerhalb einer Wicklung induzierten Spannung die Rotorposition zu bestimmen und den Motor in Abhängigkeit der ermittelten Rotorposition zu kommutieren, d. h. konkret, den Nulldurchgang der durch Eigeninduktion in einer Motorwicklung induzierten Spannung zu ermitteln und das Wiederanlegen dieser Motorwicklung an die Versorgungsspannung in einem bestimmten Winkel (Kommutierungswinkel) von diesem Punkt an durchzuführen. Bei diesem Verfahren wird der Kommutierungszeitpunkt an die aktuelle Rotorposition angepaßt, dadurch, daß der Kommutierungswinkel bzw. das dadurch in Abhängigkeit der Rotorgeschwindigkeit bestimmte Zeitintervall vom Nulldurchgang der in einer Motorwicklung induzierten Spannung an festgelegt wird. Damit erfolgt zwar die Kommutierung stets in Abhängigkeit der aktuellen Rotorposition, doch ist der Kommutierungswinkel immer der gleiche. Eine Optimierung des Kommutierungswinkels kann jedoch nur in Abhängigkeit der Drehzahl erfolgen, so daß das aus dem vorgenannten US-Patent bekannte Kommutierungsverfahren nur dann sinnvoll einsetzbar ist, wenn der Motor mit, konstanter Drehzahl betrieben wird.

Auch aus EP 0 801 463 A1 ist es bekannt, einen konstanten Kommutierungswinkel vorzusehen. Zwar ist dort vorgesehen, den Kommutierungswinkel in Abhängigkeit der mechanischen Belastung des Motors, der erforderlichen Beschleunigung, der erforderlichen Stabilität und Effizienz zu verstellen. Wie dies im Einzelnen erfolgen soll, ist dieser Druckschrift allerdings nicht zu entnehmen.

Hiervon ausgehend liegt der Erfindung die Aufgabe zugrunde, ein gattungsgemäßes Kommutierungsverfahren dahingehend zu verbessern, daß bei geringem Messaufwand eine Anpassung des Kommutierungswinkels erfolgen kann, um die Geschwindigkeit des im Stator rotierenden Drehfeldes an die des Rotors anzupassen und einen vibrationsarmen und ruhigen Lauf des Motors in allen Drehzahlbereichen zu gewährleisten. Diese Aufgabe wird gemäß der Erfindung durch die in Anspruch 1 angegebenen Merkmale gelöst. Vorteilhafte Ausgestaltungen der Erfindung sind in den Unteransprüchen angegeben.

Das erfindungsgemäße Verfahren beruht auf dem Prinzip, daß der Kommutierungswinkel, d. h. der Winkel zwischen dem Nulldurchgang der in einer Wicklung induzierten Spannung bis zum Wiederanlegen derselben Wicklung an die Versorgungsspannung in Abhängigkeit der Abweichung zwischen dem im Stator rotierenden Drehfeld und dem mit dem Rotor umlaufenden magnetischen Feld von der bestimmungsgemäßen Lage angepaßt wird. Da diese Anpassung in jedem Betriebszustand des Motors erfolgt, ist sie nicht nur für eine bestimmte, sondern für jede nur mögliche Drehzahl gewährleistet. Hierdurch kann ein hoher Wirkungsgrad und ruhiger Lauf des Motors über den gesamten Drehzahlbereich sichergestellt werden. Aufwendige Messungen zur Erfassung der Phasenverschiebung sowie zur Errechnung des Kommutierungswinkels sind nicht erforderlich, es ist lediglich eine Erfassung der Zeit oder des Winkels vom Nulldurchgang des Wicklungsstromes bis zum Nulldurchgang der in dieser Wicklung induzierten Spannung erforderlich sowie eine entsprechende Steuerung, welche nach einem Zeitintervall davon abhängiger, vorzugsweise jedoch gleicher Größe bzw. nach einem davon abhängigen, vorzugsweise gleichen Winkel die Kommutierung, d. h. das Wiederanlegen dieser Wicklung an die Versorgungsspannung vollzieht. Dies kann ohne weiteres durch den üblicherweise vorgeschalteten Umrichter mit entsprechender Steuerung erfolgen. Die Erfassung des Zeitpunkts, wenn der Wicklungsphasenstrom Null wird, sowie die des Nulldurchganges der in dieser Wicklung induzierten Spannung sind hinlänglich bekannt, die Ausbildung einer entsprechenden Steuerung zur Kommutierung des Motors in der vorbeschriebenen Weise ist dem Fachmann an die Hand gegeben, weshalb dieses hier auch nicht im einzelnen beschrieben wird.

Das erfindungsgemäße Verfahren ermöglicht also bei vergleichsweise geringem messtechnischen und steuerungstechnischen Aufwand eine Anpassung des Kommutierungswinkels bei jedem Betriebszustand des Motors, insbesondere auch bei jeder Drehzahl. Hierdurch wird nicht nur der Wirkungsgrad, sondern insbesondere auch die Laufruhe und die Geräuschemission des Motors verbessert.

Vorzugsweise wird die Kommutierungszeit so gewählt werden, daß diese gleich der Zeit ist, in der gerechnet vom Nullwerden des Phasenstromes der Nulldurchgang der induzierten Spannung erfolgt, da dann eine bezogen auf den Nulldurchgang der induzierten Spannung symmetrische Erregung des Motors erfolgt, was einen ruhigen und geräuscharmen Lauf des Motors begünstigt. Es ist jedoch auch denkbar, daß bei speziellen Anwendungsfällen oder Motorkonstruktionen eine davon abweichende Kommutierungszeit gewählt wird, die jedoch in jedem Falle in Abhängigkeit zu der zuvor ermittelten Zeit steht. Vorteilhaft wird das erfindungsgemäße Verfahren aufeinanderfolgend in jeder Phasenwicklung (hierunter werden eine oder mehrere Motorwicklungen verstanden, die derselben Phase zugeordnet sind) des Motors angewendet, um so eine möglichst genaue Anpassung des Kommutierungswinkels an den aktuellen Motorzustand zu gewährleisten.

Zweckmäßigerweise erfolgt die Messung der induzierten Spannung (Eigeninduktion) in der jeweiligen Motorwicklung erst dann, wenn diese von der Spannungsversorgung getrennt ist, um eine Überlagerung von externer Versorgungsspannung und interner Induktionsspannung zu vermeiden. Die dann an der Wicklung anliegende Spannung ist ausschließlich durch Eigeninduktion hervorgerufen und repräsentiert in an sich bekannter Weise das BEMF-Signal (**b**ack **e**lectro**m**otive **f**orce).

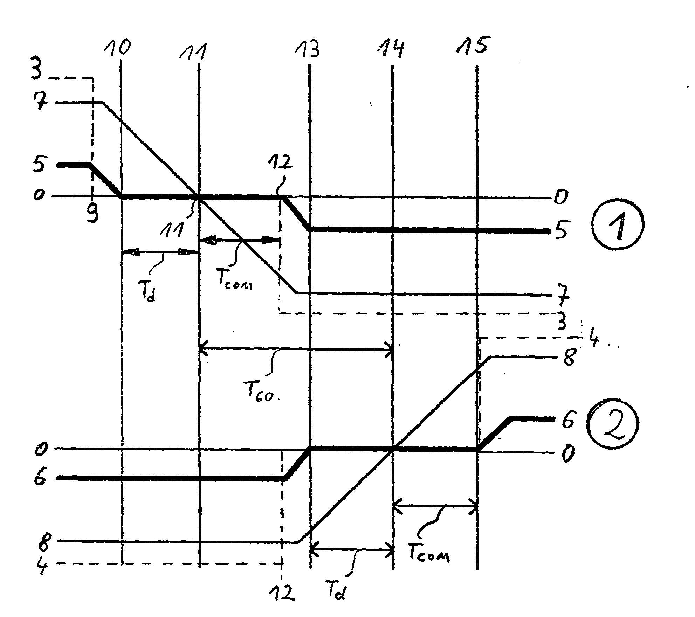

Die Erfindung ist nachfolgend anhand eines in der Zeichnung dargestellten Ausführungsbeispiels erläutert. Die Zeichnung zeigt den schematischen Verlauf von Versorgungsspannung, Motorstrom und induzierten Spannung von zwei nacheinander kommutierten Wicklungen eines elektronisch kommutierten Dreiphasen-Permanent-magnetmotors. Zwei (der insgesamt drei oder ggf. auch mehr) Motorphasenwicklungen, die aufeinanderfolgend kommutiert werden, sind in der Figur mit 1 und 2 gekennzeichnet. Die unterbrochenen Linien 3 und 4 kennzeichnen den zeitlichen Verlauf der Versorgungsspannungen in den Wicklungen 1 und 2. Die fetten durchgezogenen Linien 5 und 6 kennzeichnen den zeitlichen Stromverlauf in diesen Motorphasenwicklungen. Die dünnen durchgezogenen Linien 7 und 8 kennzeichnen den zeitlichen Verlauf der in der jeweiligen Motorphasenwicklung induzierten Spannungen (BEMF). Die zeitlichen Spannungsverläufe gemäß den Linien 3 und 4, die zeitlichen Stromverläufe gemäß den Linien 5 und 6 sowie die zeitlichen Verläufe der induzierten Spannungen gemäß den Linien 7 und 8 sind jeweils auf eine Nullinie 0 bezogen, wobei Werte oberhalb der Nullinie positiv und Werte darunter negativ sind.

Betrachtet man die Motorphasenwicklung 1, so wird deutlich, daß diese zunächst mit einer positiven Versorgungsspannung 3 angesteuert wird, die zum Zeitpunkt 9 abgeschaltet wird. Wie sich anhand des zugehörigen Wicklungsstromverlaufes 5 ergibt, fällt der Wicklungsphasenstrom 5 nach Abschalten der Spannung 3 auf Null ab, dieser Zeitpunkt ist mit 10 gekennzeichnet. Die in derselben Motorphasenwicklung 1 induzierte Spannung 7 fällt nach Abschalten der Versorgungsspannung 3 ebenfalls ab, wobei sich in einem zeitlichen Abstand $T_d$ zum Zeitpunkt 10 die Spannung 7 bis auf Null abgefallen ist. Dieser Zeitpunkt ist mit 11 gekennzeichnet. Zum Zeitpunkt 12 wird dann die Versorgungsspannung 3 wieder an die Motorphasenwicklung 1 angelegt, dann jedoch mit umgekehrten Vorzeichen. Der Wicklungsphasenstrom 5 steigt dann vom Zeitpunkt 12 betragsmäßig wieder an, jedoch diesmal entsprechend der negativen Versorgungsspannung 3 in umgekehrter Richtung.

Betrachtet man nun die Motorphasenwicklung 2, so erkennt man die versetzt zur Motorphasenwicklung 1 erfolgte Spannungsbeaufschlagung dieser Wicklung, so wie dies bei blockkommutierten Motoren dieser Art prinzipiell üblich und bekannt ist. So ist in dem Zeitraum von 9 bis 12 die Versorgungsspannung 4 in der Motorphasenwicklung 2 negativ, während sie im Zeitpunkt 12 auf Null abfällt und die Versorgungsspannung der Motorphasenwicklung 1 negativ wird. Der Wicklungsphasenstrom 6 verläuft zunächst konstant, bis er nach Abschalten der Versorgungsspannung 4 im Zeitpunkt 12 abfällt und schließlich im Zeitpunkt 13 den Wert Null annimmt. Während die Versorgungsspannung 4 und Wicklungsstrom 6 Null bleiben, steigt die induzierte Spannung 8 bis auf Null an. Dieser Zeitpunkt ist mit 14 gekennzeichnet. Während der Wicklungsphasenstrom 6 und die Versorgungsspannung 4 in dieser zweiten Motorphasenwicklung 2 weiterhin Null betragen, steigt dann die induzierte Spannung 8 weiter an. Zum Zeitpunkt 15 erfolgt die Kommutierung, d. h. das Wiedereinschalten der Versorgungsspannung 4 der zweiten Motorphasenwicklung 2, wonach der Wicklungsphasenstrom 6 wieder ansteigt. Vom Zeitpunkt 15 an ist die Motorphasenwicklung 2 mit positiver Spannung beaufschlagt, die Motorphasenwicklung 1 weiterhin mit negativer.

Während man nach dem Stand der Technik den Kommutierungswinkel stets konstant hält und die Phasenlage zwischen Rotor und Stator anhand einer Zeit $T_{60}$ bestimmt, welche durch zwei aufeinanderfolgende Nulldurchgänge der induzierten Spannung in zwei aufeinanderfolgenden Motorphasenwicklungen bestimmt und dadurch letztlich die Rotorgeschwindigkeit ermittelt, geht die vorliegende Erfindung den folgenden Weg. Es wird vorzugsweise in jeder Motorphasenwicklung gesondert die Zeit $T_d$ ermittelt, zwischen dem Zeitpunkt, wenn der Wicklungsphasenstrom den Wert Null erreicht, und dem Zeitpunkt, wenn der Nulldurchgang der induzierten Spannung in derselben Motorphasenwicklung erfolgt. Diese Zeit $T_d$ bzw. der dieser Zeit entsprechende Winkel bestimmt den Kommutierungswinkel, d. h. die Zeit zwischen dem Nulldurchgang der induzierten Spannung der versorgungsspannungsfrei geschalteten Motorphasenwicklung und dem Wiederanlegen der Versorgungsspannung an diese Motorphasenwicklung. Da diese Zeit $T_d$ in jeder Motorphasenwicklung gemessen bzw. bestimmt wird, wird dadurch auch die Kommutierungszeit $T_{com}$ bzw. der entsprechende Kommutierungswinkel ständig angepaßt, wodurch sich eine sehr schnelle Anpassung des Kommutierungswinkel an den aktuellen Motorzustand, d. h. Drehzahl, Belastung etc. ergibt. Es hat sich gezeigt, daß gerade diese Wahl des Kommutierungswinkels besonders vorteilhaft ist und einen besonders gleichmäßigen und ruhigen Motorlauf und somit auch hohen Motorwirkungsgrad gewährleistet, und zwar bei unterschiedlichen Drehzahlen und Belastungszuständen. Dadurch, daß der Zeitraum zwischen dem Erreichen der Nullinie des Phasenstromes bis zum Nulldurchgang der induzierten Spannung und der Zeitraum vom Nulldurchgang der induzierten Spannung bis zum Anlegen der Versorgungsspannung an die Motorphasenwicklung gleich ist, ergibt sich stets eine symmetrische Erregung des Motors um den Nulldurchgang der induzierten Spannung (BEMF), wodurch die Phasenverschiebung zwischen dem Drehfeld des Stators und dem des Rotors gegenüber der bestimmungsgemäßen Lage minimiert wird. Hierdurch wird gleichzeit der Drehmomentverlauf des Motors vergleichmäßigt und der Wirkungsgrad erhöht.

Im einzelnen erfolgt die Kommutierung folgendermaßen:

In der Motorphasenwicklung 1 wird dann, wenn die Versorgungsspannung 3 abgeschaltet, d. h. auf Null gesetzt wird, der Wicklungsphasenstrom 5 detektiert, insbesondere der Zeitpunkt 10, an dem der Wicklungsstrom Null wird. Weiterhin wird die in dieser Wicklung 1 induzierte Spannung 7 gemessen, was entweder durch einen Hallsensor oder aber auch durch Spannungsmessung in dieser Motorphasenwicklung 1 selbst erfolgen kann, zumindest, solange die Versorgungsspannung 3 Null beträgt. Dieser Nulldurchgang ist im Zeitpunkt 1 erreicht, wodurch die Zeit $T_d$, also die Zeit zwischen dem Zeitpunkt 10, wenn der Wicklungsphasenstrom 5 Null erreicht hat, bis zum Zeitpunkt 11, an dem die induzierte Spannung 7 Null erreicht hat, bestimmt. Diese Zeit $T_d$ bestimmt dann den darauffolgenden Kommutierungswinkel $T_{com}$, d. h. die Zeit, nach welcher die Versorgungsspannung 3 wieder an diese Wicklung 1 angelegt wird, gerechnet vom Nulldurchgang 11 der induzierten Spannung 7an.

$$T_d = T_{com}$$

In gleicher Weise wird in der Motorphasenwicklung 2 verfahren. Zum Zeitpunkt 12 wird die Versorgungsspannung 4 abgeschaltet, danach steigt der Wicklungsphasenstrom 6 auf Null an, was zum Zeitpunkt 13 erreicht ist. Die in dieser Wicklung 2 induzierte Spannung 8 steigt ebenfalls an und erreicht zum Zeitpunkt 14 den Nullpunkt. Durch das zwischen den Zeitpunkten 13 und 14 gebildete Zeitintervall ist $T_d$ und bestimmt den darauf folgenden Kommutierungswinkel $T_{com}$, der $T_d$ entspricht. Zum Zeitpunkt 15 wird dann die Versorgungsspannung 4 wieder an diese Wicklung 2 angelegt, und zwar mit umgekehrten Vorzeichen, wie dies bei Dreiphasenmotoren üblich ist, bei denen stets in einer Motorphasenwicklung eine positive Spannung, in einer anderen Motorphasenwicklung eine negative Spannung und in der dritten Motorphasenwicklung keine Versorgungsspannung anliegt.

Die Ermittlung der Zeit $T_d$ ist messtechnisch vergleichsweise einfach, da es weder erforderlich ist, den Stromverlauf der Motorphasenwicklungen zu ermitteln noch den Spannungsverlauf der induzierten Spannung, es genügt vielmehr, jeweils das Erreichen der Nullinie bzw. den Nulldurchgang und den dazwischen liegenden Zeitraum zu ermitteln.

Bezugszeichenliste

0 - Nullinie
1 - Motorphasenwicklung 1
2 - Motorphasenwicklung 2
3 - Versorgungsspannung in Phase 1
4 - Versorgungsspannung in Phase 2
5 - Wicklungsphasenstrom in Phase 1
6 - Wicklungsphasenstrom in Phase 2
7 - induzierte Spannung (BEMF) in Phase 1
8 - induzierte Spannung (BEMF) in Phase 2
9 - Zeitpunkt Spannung = Null in Phase 1
10 - Zeitpunkt Strom = Null in Phase 1
11 - Zeitpunkt BEMF = Null in Phase 1
12 - Zeitpunkt Spannung = Null in Phase 2
13 - Zeitpunkt Strom = Null in Phase 2
14 - Zeitpunkt BEMF = Null in Phase 2
15 - Spannung ein in Phase 2

$T_{com}$ - Kommutierungswinkel bzw. Kommutierungszeit
$T_d$ - Zeit zwischen Wicklungsphasenstrom = Null und Nulldurch- gang der induzierten Spannung
$T_{60}$ - Zeit zwischen zwei Nulldurchgängen der induzierten Spannung

Patentansprüche

1. Verfahren zur Kommutierung eines elektronisch kommutierten bürstenlosen Mehrphasen-Permanentmagnetmotors, bei dem die Rotorposition bezogen auf den Stator und das darin rotierende Drehfeld anhand der induzierten Spannung in mindestens einer Motorwicklung ermittelt und das Anlegen der externen Spannung an die Motorwicklung entsprechend der ermittelten Rotorposition zeitlich angepaßt wird, **dadurch gekennzeichnet, daß** in mindestens einer Motorwicklung die Zeit von dem Zeitpunkt, an dem der Wicklungsstrom nach dem Abschalten der Spannung im wesentlichen den Wert Null angenommen hat bis zum Nulldurchgang des in dieser Wicklung induzierten Spannung ermittelt und in Abhängigkeit dieser Zeit die externe Spannung an diese Wicklung wieder angelegt wird.

2. Verfahren Nach Anspruch 1, **dadurch gekennzeichnet, daß** nach der gleichen Zeit, die von dem Zeitpunkt, an dem der Wicklungsstrom nach dem Abschalten der Spannung im wesentlichen den Wert Null angenommen hat bis zum Nulldurchgang des in dieser Wicklung induzierten Spannung vergeht, gerechnet vom Nulldurchgang der induzierten Spannung an, die Spannung an diese Wicklung wieder angelegt wird.

3. Verfahren nach einem der vorhergehenden Ansprüche, **dadurch gekennzeichnet, daß** in jeder Motorwicklung die Zeit von dem Zeitpunkt, an dem der Wicklungsstrom nach dem Abschalten der Spannung im wesentlichen den Wert Null angenommen hat bis zum Nulldurchgang des in dieser Wicklung induzierten Spannung ermittelt und die externe Spannung nach der gleichen Zeit, gerechnet vom Nulldurchgang der induzierten Spannung an, an diese Wicklung wieder angelegt wird.

4. Verfahren nach einem der vorhergehenden Ansprüche, **dadurch gekennzeichnet, daß** die Messung der induzierten Spannung erst dann erfolgt, wenn die entsprechende Wicklung vom Versorgungsnetz getrennt bzw. spannungslos geschaltet ist.

**Claims**

1. A method for commutating an electronically commutated brushless polyphase permanent magnet motor with which the rotor position with respect to the stator and to the rotary field rotating therein is determined by way of the induced voltage in at least one motor winding, and the application of the external voltage to the motor winding is adapted, with respect to time, according to the determined rotor position, **characterised in that** in at least one motor winding, the time from the point in time at which the winding current after switching off the voltage has essentially assumed the value zero until the zero-crossing of the voltage induced in this winding is evaluated and the external voltage is again applied to this winding in dependence on this time.

2. A method according to claim 1, **characterised in that** after the same time, which passes from the point in time at which the winding current after switching off the voltage has essentially assumed the value zero until the zero-crossing of the voltage induced in this winding, computed from the zero-crossing of the induced voltage, the voltage is again applied to this winding.

3. A method according to one of the preceding claims, **characterised in that** in each motor winding, the time from the point in time at which the winding current after switching off the voltage has essentially assumed the value zero until the zero-crossing of the voltage induced in this winding is evaluated, and the external voltage after the same time, computed from the zero-crossing of the induced voltage is again applied to this winding.

4. A method according to one of the preceding claims, **characterised in that** the measurement of the induced voltage is effected only when the respective winding is separated from the supply network or is connected without voltage.

**Revendications**

1. Procédé de commutation d'un moteur polyphasé à aimant permanent sans balai, commuté électroniquement, selon lequel la position du rotor rapportée au stator et au champ tournant qui s'y propage par rotation, est déterminée à l'aide de la tension induite dans au moins un enroulement du moteur, et l'application de la tension externe à l'enroulement du moteur est adaptée dans le temps en conformité avec la position déterminée du rotor, **caractérisé en ce que** dans au moins un enroulement du moteur, le temps depuis l'instant où le courant dans l'enroulement, après la coupure de la tension, a pris sensiblement la valeur zéro, jusqu'au passage par zéro de la tension induite dans cet enroulement, est déterminé, et la tension externe est ré-appliquée à cet enroulement en fonction de ce temps.

2. Procédé selon la revendication 1, **caractérisé en ce que** la tension est ré-appliquée audit enroulement au bout du même temps que celui qui s'écoule de l'instant où le courant dans l'enroulement, après la coupure de la tension, a pris sensiblement la valeur zéro, jusqu'au passage par zéro de la tension induite dans cet enroulement, compté à partir du passage par zéro de la tension induite.

3. Procédé selon l'une des revendications précédentes, **caractérisé en ce que** dans chaque enroulement du moteur, le temps depuis l'instant où le courant dans l'enroulement, après la coupure de la tension, a pris sensiblement la valeur zéro, jusqu'au passage par zéro de la tension induite dans cet enroulement, est déterminé, et la tension externe est ré-appliquée à cet enroulement au bout du même temps, compté à partir du passage par zéro de la tension induite.

4. Procédé selon l'une des revendications précédentes, **caractérisé en ce que** la mesure de la tension induite ne s'effectue que lorsque l'enroulement correspondant est déconnecté du réseau d'alimentation ou est mis hors tension.